# EUROPEAN PATENT APPLICATION

(11) **EP 1 596 092 A1**
(43) Date of publication of application: **16.11.2005**
(21) Application number: 05252820.5
(22) Date of filing: 09.05.2005
(51) Int. Cl.: F16D 66/02, F16D 66/00, F16D 65/56

(54) **Brake pad wear indicator**

(30) Priority: 13.05.2004 GB 0410659
(71) Applicant: Meritor Heavy Vehicle Braking Systems (UK) Limited, Cwmbran, Gwent NP44 3XU (GB)
(72) Inventor: Tom Peter England, South Wales, NP20 4EX (GB); Paul anthony Thomas, Newport, NP26 3AY (GB); Paul Roberts, Newport, NP20 5QU (GB); Simon Fisher, Monmouthshire, NP4 8BQ (GB)

(57) **Abstract**

A brake assembly including
a caliper (1)
a first brake pad
an actuator (6) operable to force the brake pad into engagement with a rotor,
and an adjuster mechanism operable to compensate for wear of the first brake pad, the adjuster mechanism (11) having a rotating component that is caused to rotate substantially in proportion to wear of the first brake pad, and is manually operable to deadjust the adjuster mechanism when replacement of the first brake pad is required, the rotating component being operably coupled to a pad wear indicator mounted on the caliper which visually indicates the amount of brake pad wear (G).

## Description

The present invention relates to brake pad wear indicators in particular for use on disc brake assemblies of heavy vehicles such as trucks and buses.

Wear indicators are known wherein the movement of a floating brake caliper (also known as a sliding brake caliper) in an inboard direction as the outboard pad wears can be detected by the use of a wear indicator which allows a comparison to be made between the position of the floating caliper and the position of the fixed carrier upon which the floating caliper is slideably mounted.

However, such wear indicators take no account of the wear of the inboard pad.

An object of the present invention is to provide an alternative type of brake pad wear indicator. When used with a floating caliper brake, another object of the present invention is to provide a brake pad wear indicator that indicates the wear of both friction pads. Another object of the present invention is to provide a brake pad wear indicated that can be retro fitted onto brake assemblies which either do not have brake pad wear indicators or have the above mentioned known wear indicator.

Thus, according to the present invention there is provided a brake assembly, a wear indicator assembly, and a repair kit as defined in the accompanying independent claims.

The invention will now be described, by way of example only, with reference to the accompanying drawings in which:-
Figure 1 is an isometric view of part of a known brake caliper having a known wear indicator,
Figure 2 is a schematic view of figure 1,
Figure 3 is a view of a prior art brake caliper having an adjusting mechanism,
Figure 4 is a cross section view of a wear indicator assembly according to the present invention,
Figure 5 is an isometric view of figure 4,
Figure 6 is a cross section view of a second embodiment of a wear indicator assembly according to the present invention,
Figure 7 is a cross section view of a third embodiment of a wear indicator assembly according to the present invention, and
Figure 8 is a cross section view of a fourth embodiment of a wear indicator assembly according to the present invention.

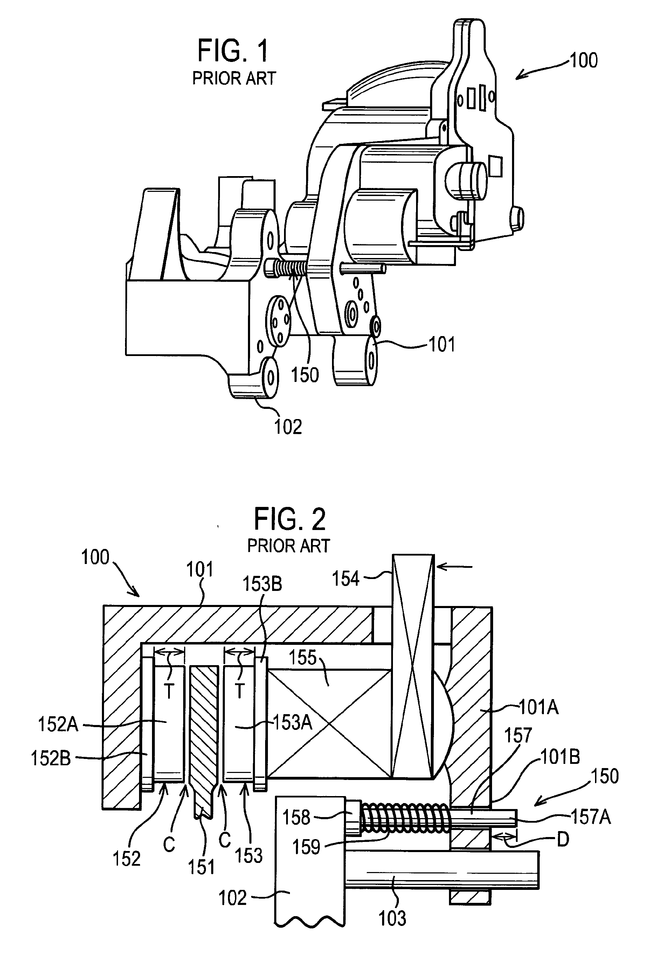

Figures 1 and 2 show a known brake assembly 100 having a known wear indicator 150.

The main components of the brake assembly are a sliding caliper 101 which is slideably mounted on guide pins 103 relative to a fixed carrier 102 (which is typically secured to suspension components of the associated vehicle). A brake disc 151 rotates with an associated wheel and is clamped between an outboard brake pad 152 and an inboard brake pad 153 to apply a braking force. The brake pads each include friction material 152A and 153A and a brake pad backplate 152B and 153B. A brake actuator 154 (shown schematically in figure 2) is operable to apply a brake force. Brake actuator 154 acts through an adjustable tappet assembly 155 (shown schematically on figure 2).

Actuation of actuator 154 causes the adjustable tappet assembly 155 to move to the left when viewing figure 2 thereby forcing brake pad 153 into engagement with brake disc 151. A reaction force causes the sliding caliper 101 to move to the right when viewing figure 2 thereby engaging brake pad 152 with the disc 151. In this manner, the brake disc is clamped between the brake pads, thereby causing a friction force to slow the associated vehicle.

It can be seen from figure 2 that in the "brakes off' condition there is a running clearance C between the disc and each brake pad.

Figure 2 shows the brake assembly with unworn brake pads. As the outboard brake pad 152 wears, the adjustable tappet assembly 155 will automatically be caused to expand, thereby progressively moving the sliding caliper 101 to the right when viewing figure 2.

The wear indicator 150 is in the form of a rod 157 which projects through a hole in the sliding caliper body 101A. The outboard end of rod 157 includes a head 158 which is biased into engagement with the fixed carrier 102 by a spring 159.

Figure 2 shows the brake assembly with new brake pads each having an equivalent thickness T.

End 157A of rod 157 projects past surface 101B of caliper body 101A by distance D. Typically distance D would be slightly less than thickness T. By way of example, where the thickness of the brake pad T is 20mm, distance D might be 18mm.

As the brake pads wear, in order to maintain the correct running clearance, adjustable tappet assembly 155 automatically adjusts and expands, thereby progressively causing the sliding caliper 101 to move to the right when viewing figure 2. Since rod 157 is in engagement with fixed caliper 102, rod 157 does not move and spring 159 expands slightly to ensure head 158 remains in engagement with fixed carrier 102. It will therefore be appreciated that as the outboard pad 152 wears, distance D will decrease. When distance D has decreased to zero, i.e. when the end of rod 157 is flush with surface 101B, then this is an indication that outboard pad 152 has reached its wear limit and requires replacement. In the above example, when distance D equals zero, then outboard pad 152 has 2 millimetres of friction material remaining and therefore will require changing.

In view of the above explanation, it will be appreciated that the wear indicator 150 only indicates the wear condition of the outboard pad.

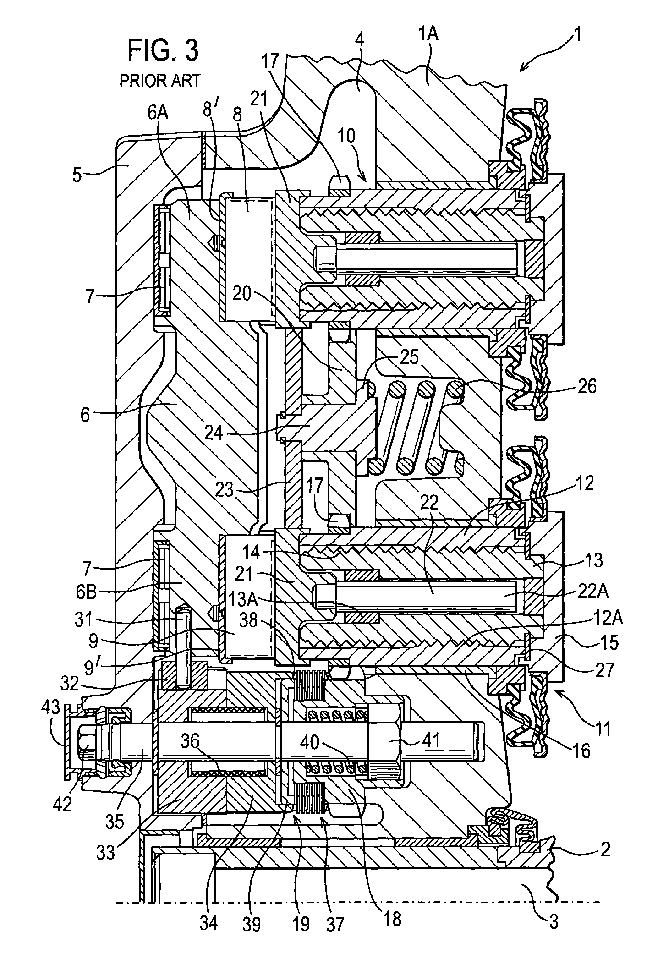

Figure 3 shows a known brake assembly including an adjustable tappet assembly. For a full explanation of this device, the reader is referred to PCT Patent Application, PCT/GB96/01476, publication number W09701045. However, in summary, operation of the assembly is as follows:-

Referring to Figure 3 in detail, this illustrates a sliding caliper 1 of a disc brake mounted relative to a fixed carrier 2 in conventional manner by guide pins, of which one is illustrated at 3. The caliper 1 defines a chamber 4, closed by an end cover 5, housing an actuator and adjuster mechanism to be described in detail hereafter. The disc brake includes a pair of brake pads (also known as brake linings), not shown but similar to those shown in figure 2, which act on a rotor, not shown but similar to that shown in figure 2.

The actuator is of a type, similar to that disclosed, for example in WO93/22579, as will be understood by one versed in the art, and includes a rotary member 6, rotatable, in use, by a conventional power device, such as an air actuator (not shown), the member 6 being rotationally supported against the cover 5 by way of needle bearings 7. Portions 6A, 6B of the member 6 locate respective cylindrical rollers 8, 9, which are seated in respective part-cylindrical bearings 8', 9'. The axes of the rollers 8 and 9 and the portions 6A, 6B are offset from one another and form an eccentric arrangement with the rollers 8 and 9 bearing against adjacent adjustable tappet assemblies 10, 11.

The tappet assemblies are identical and only the assembly 11 will be described in detail. This assembly comprises an outer sleeve 12 which is internally threaded at 12A over a part of its length and within which is contained a shaft 13 having a complementary external thread 14 over substantially its entire length engaged with the sleeve thread 12A. The shaft 13 is provided at its outer end with a tappet head 15 which is releasably coupled to the shaft so as, conveniently, to be freely rotatable relative to the latter. The sleeve 12 is rotatably mounted in the caliper body 1A by way of a low friction bearing sleeve 16 and is provided with an external gear form 17 which may be either a separate component firmly secured to the sleeve, as illustrated, or a formation integral with the latter. The gear form 17 meshes with a corresponding formation on a gear wheel 18 forming part of an adjuster mechanism indicated generally at 19 and also with an intermediate gear 20 which is freely rotatably mounted and located between the tappet assemblies 10 and 11.

An end abutment 21 is engaged over the end of the sleeve 12 opposite to that carrying the tappet head 15 and is rigidly connected to or integral with a pin 22 which extends within the shaft 13 and has a non-circular shape engaging within a relatively short insert 13A non-rotatably mounted within the shaft. The pin 22 provides a guide for the shaft 13 during axial movement of the shaft between extreme retracted and extended portions thereof, and also serves to lock the shaft against rotation. For this purpose, in the embodiment described, the pin 22 is of part-circular cross-section with a pair of opposed flats 22A for engagement with corresponding flats within the insert. The pin 22 and insert 13A may alternatively be non-rotatably interconnected by way of other suitable formations providing the necessary non-rotational connection whilst permitting axial sliding of the shaft 13 along the pin. It can be seen that the abutment 21 is keyed by the pin 22 and insert 13A against rotation relative to the shaft 13 and the abutment is itself prevented from rotation by engagement with a plate member 23 which also engages, in similar manner, a corresponding head 21 on the other tappet assembly 10. The plate member 23 carries a pin 24 which rotatably mounts the intermediate gear 20, a radial flange 25 of the pin providing an abutment for one end of a tappet return spring 26, the other end of which bears against an internal surface of the caliper body 1A.

The manner of connecting the tappet head 15 to the shaft 13 is effected by way of a circlip 27 housed within a groove of the shaft 13 and engaged behind a shoulder of the tappet head.

The automatic adjuster mechanism 19 operates to lengthen the tappet assembly 11 to compensate for wear of the brake friction linings, the adjuster acting on the sleeve 12 of the tappet and, via the gear wheel 20, on the corresponding sleeve in the identical tappet 10. The eccentric member or shaft 6 is linked to the adjuster by way of a pin 31 forming a connection between the shaft 6 and a bush 32 of the adjuster. The bush 32 is coupled to a drive sleeve assembly comprising two generally cylindrical sleeve components 33, 34 arranged in axial succession around an adjuster shaft 35, the components being frictionally interconnected by way of a wrap spring 36 arranged to engage respective internal surfaces of the components. A multi-plate clutch assembly, illustrated generally at 37, has one set of plates coupled to a cylindrical extension 38 of the component 34 and its other set of plates connected to an intermediate component 39 mounted on the shaft 35. The multi-plate clutch is also in driving engagement with the gear wheel 18 referred to previously, the clutch being pre-loaded by a spring 40. The normal running clearance of the brake is provided for by clearance between the component 34 and the part of the clutch 37 engaged therewith. The shaft 35 is provided with an inner hexagon formation 41 engaged with a corresponding internal formation within the gear wheel 18 and the shaft thus rotates permanently with the gear wheel. The outer end of the shaft 35 is provided also with a drive formation 42 which, in this embodiment, is hexagonal. This formation is normally disposed within a protective cap 43 which is securely mounted in the housing and removable to permit adjusting rotation of the shaft by way of the drive formation 42.

Actuation of the brake by rotation of the eccentric shaft 6 results in rotation of the sleeve components 33, 34 and of the movement of the tappets does not exceed the nominal brake clearance, as would be the case for example with the linings in new condition, the sleeves will merely move by the amount of the built-in clearance and return to their original positions, without adjustment taking place. When friction lining wear results in rotational movement of the sleeve 34 by an amount greater than the built-in clearance, the clutch is caused to rotate, together with the intermediate component 39 and the gear wheel 18, thereby rotating the tappet sleeves 12 in a direction such as to wind out the shafts 13 and thereby lengthen the strut assemblies by an amount equal to the excess actuator movement. If the caliper is subjected to loads high enough to cause deflection of the brake components, operation of the adjustment will be prevented by slipping of the multi-plate clutch at a predetermined torque representing a maximum permitted load.

Release of the brake results in return movement of the tappets under the action of the return spring 26, such return movement being accompanied by slipping of the multi-plate clutch until the applied torque is such that the clutch is held in its non-slipping condition. Continued rotation of the sleeves 33, 34 enables the brake clearance to be reset and, if adjustment has occurred, the final part of the return stroke of the eccentric shaft 6 will be accompanied by relative slipping between the components 33, 34, as permitted by the wrap spring. The mechanism is thereby set for a subsequent brake application.

In particular, caliper 1 does not include a brake pad wear indicator.

It will be appreciated that certain components within caliper 1 rotate substantially in proportion to the total amount of wear of the associated brake pads (also known as first and second brake pads) (However note the comments below in respect of wear of the brake disc). Thus, adjuster shaft 35, gear wheel 18, both external gear forms 17, and intermediate gear 20 all rotate substantially in proportion to the total wear of the brake pads. The applicant is the first to realise that where a component of an adjuster mechanism rotates substantially in proportion to the total wear of the brake pads, then that component can be utilised to drive a wear indicator.

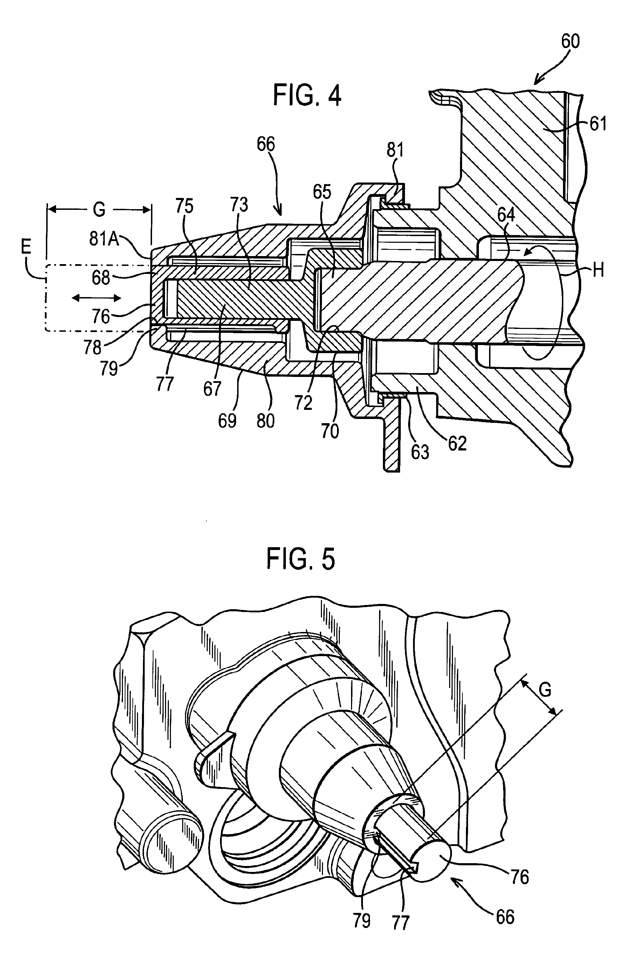

A particularly cost effective method of providing a wear indicator is shown in figures 4 and 5.

A brake assembly 60 is provided (only part of which is shown) having a sliding caliper 61 (which typically might be similar to sliding caliper 1). Caliper 61 includes an annular boss 62 having a ring retainer 63 secured thereto, typically by providing an interference fit between the annular boss and the ring retainer. The brake assembly includes an adjuster mechanism only part of which (manual adjuster shaft 64) is shown. Typically manual adjuster shaft 64 might be similar to manual adjuster shaft 35. Manual adjuster shaft 64 includes a drive formation 65, in this case in the form of a hexagonal head. A wear indicator assembly 66 includes a first component 67, a second component 68 and a manual adjuster shaft cap 69. First component 67 includes a boss 70 having a hexagonal recess 72 for engagement with head 65 to rotatably secure the first component 67 to the manual adjuster shaft 64. A shaft 73 projects from boss 70 and includes an external shaft thread (not shown).

The second component is in the form of an indicator pin which includes a generally cylindrical body 75 having an internal body thread (not shown) that is in threaded engagement with the external shaft thread. Cylindrical body 75 has a closed end 76 and includes a longitudinal groove 77 (best seen on figure 5) on the outside of the body.

The manual adjuster shaft cap 69 includes an end hole 78 for slideably supporting the indicator pin 68. End hole 78 is generally circular but includes an anti-rotation feature in the form of a projection 79 that engages the longitudinal groove 77 and prevents rotation of the indicator pin relative to the shaft cap. The shaft cap 68 includes a body 80 which generally surrounds the indicator pin 68, the first component 67, the hexagonal head 65 of the manual adjuster shaft and part of the annular boss 62. An annular portion 81 of shaft cap 69 sealingly engages the ring retainer 63 and prevents rotation of shaft cap 69 relative to the sliding caliper 61. Body 80 includes a flat annular region 81A that surrounds end hole 78.

Because the indicator pin 68 is a close fit within end hole 78, the shaft cap 69 together with the indicator pin together protect the first component and the manual adjuster shaft from the ingress of dirt, dust, water etc.

Assembly and operation of the wear indicator assembly 66 is as follows:-

For the purposes of this example, brake assembly 60 is assumed to have a new set of brake pads and manual adjuster shaft 64 is adjusted to give the correct running clearance between the rotor and the pad.

Once this has been done, the hexagonal recess 72 of the first component 67 is fully engaged with the hexagonal head of the manual adjuster shaft 64. Head 65 is a tight fit in recess 72, thereby ensuring that first component 67 remains fixed axially relative manual adjuster shaft 65 during subsequent operation of the brake.

The indicator pin 68 is then threadingly engaged with the externally threaded shaft 73 and rotated until closed end 76 lies at the chain dotted position indicated at E. The shaft cap 69 is then fitted over the indicator pin 68 such that projection 79 engages in and is slid along groove 77 and the annular region 81 is engaged behind the ring retainer 63, thereby securing the shaft cap 69 rotatably fast with the annular boss 62 of the caliper 61.

Figures 4 and 5 show the wear indicator assembly 66 with closed end 76 projecting from the flat annular region 81 A via distance G.

Once assembled and the associated vehicle is used, the brake pads will progressively wear. The adjuster mechanism will compensate for this wear and cause the manual adjuster shaft 64 to rotate in the direction of arrow H. This in turn will cause the first component 67 to rotate by an equivalent amount.

In the present example, the external shaft thread and the internal body thread are right hand threads.

As mentioned above the shaft cap 69 and indicator pin 68 are prevented from rotating. Thus, as the brake pads wear, the threaded engagement between the first and second components will progressively draw the indicator pin 68 inwardly, thereby reducing distance G. It will be appreciated that the reduction in distance G is substantially proportional to the total amount of pad wear on the inner and outer brake pads.

The amount by which the manual adjuster shaft 64 rotates per 1 millimetre of total brake pad wear is dependent upon the particular gearing of the associated adjuster mechanism. By way of example, the adjuster mechanism gearing could be such that if the inboard and outboard brake pads each wear by ½ millimetre (i.e. a total of 1 millimetre of brake pad wear) then manual adjuster shaft 64 could rotate through 360 degrees. Using this example, then the thread pitch of the external shaft thread and the internal body thread could be ½ millimetre. Under the circumstances, it will be appreciated that if both brake pads wear 1 millimetre, then distance G will reduce by 1 millimetre.

Furthermore distance G can serve as a direct indicator of the total amount of friction material remaining on each brake pad. When closed end 76 becomes flush with the flat annular region 81 A, the brake pads will require changing. By way of example, if each brake pad has 20 millimetres of friction material thickness and distance G is set at 18 millimetres with new brake pads, when distance G becomes zero, i.e. when closed end 76 becomes flush with flat annular region 81A, then the pads require changing since they will each have only 2 millimetres of friction material remaining and continued running of the vehicle risks metal to metal contact between the disc and brake pad backplate which is a safety hazard.

It will be appreciated that alternative gearing of adjuster mechanism, and/or an alternative thread pitch of the first and second component will produce a wear indicator wherein distance G may reduce either faster or slower than the wear on a brake pad. Furthermore, wear limit need not be indicated by closed end 76 becoming flush with flat annular region 81A.

As mentioned above, head 65 is a tight fit in recess 72 thereby ensuring that first component 67 does not move to the left when viewing figure 4 as the brake pads wears. In an alternative embodiment, head 65 could be a non-interference fit in recess 72 with an inner shoulder of the manual adjuster shaft cap being located proximate boss 70 in order to ensure that the first component does not move to the left during adjuster operation.

As mentioned above, as the brake pads wear, the indicator pin 86 moves towards the associated caliper. If the external shaft thread and internal body thread are provided as left hand threads in a further embodiment, then the wear indicator assembly could be set up with the closed end of the indicator pin flush with the flat annular region when the brake pads are new, and as the brake pads wear the indicator pin will progressively project from the flat annular region. Under these circumstances, the wear limit of the brake pads could be indicated by a colour change on the indicator pin. Thus, the outermost 18 millimetres of the indicator pin could be coloured green, with the remainder of the pin being coloured red. As the brake pads reach their wear limit, then the red colour of the indicator pin would start to show, thereby indicating the requirement for a pad change.

An alternative way of assembling the wear indicator assembly 66 is to assemble the first component 67, second component 68 and shaft cap 69 together remotely from the caliper such that closed end 76 is positioned at distance G from flat annular region 81A (i.e. the wear indicator assembly is preset to an unworn pad condition prior to assembly) and then assemble the wear indicator assembly 66 onto the sliding caliper 61 by substantially simultaneously engaging recess 72 with hexagonal head 65 and annular portion 81 around ring retainer 63. This is particularly advantageous when the wear indicator assembly is provided as a kit of parts together with replacement brake pads (see below).

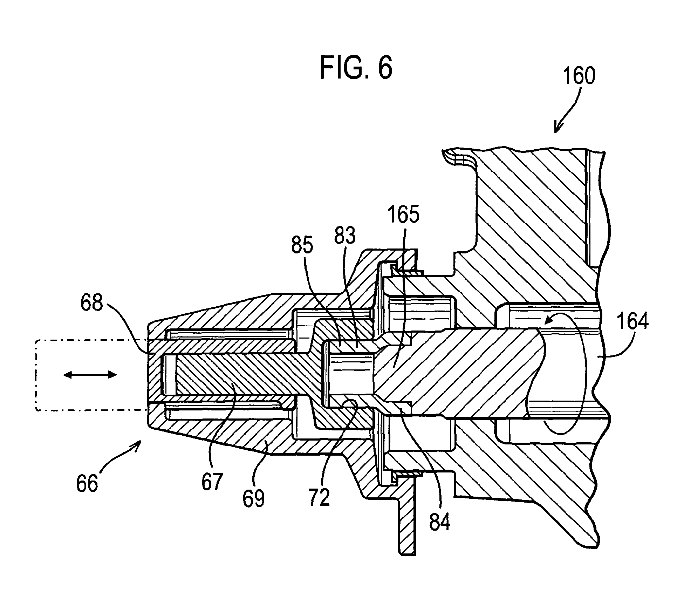

Figure 6 shows a second embodiment of a brake assembly 160 which includes the wear indicator assembly 66 of figure 4, however in this case, the hexagonal recess 72 of the first component 67 engages a torque limiting device 83 which in turn engages a drive formation 165 in the form of a hexagonal head of manual adjuster shaft 164. Torque limiting devices per se are known, and examples can be found in UK Patent GB2304387 and German Patent DE19923457C1. However in summary, the torque limiting device has a region 84 that engaged head 165 and a region 85 that is designed to be engaged by a tool such as a spanner or hexagonal socket. The torque limiting device operate to prevent damage to the caliper as follows:-

When the brake pads have worn down to their service limit, they must be removed. In order to be able to insert the new, thicker brake pads, the adjuster mechanism must be de-adjusted, and this is typically done by manually rotating the manually adjuster shaft. This is done by removing the wear indicator assembly 66 and engaging a socket on region 85 of the torque limiting device. Rotation of the socket will cause the torque limiting device to rotate shaft 164. However, if too much torque is inadvertently applied to the socket, then the torque limiting device will prevent excess torque being applied to the manual adjuster shaft, typically be shearing in half. Whilst the torque limiting device may have been irreparably damaged under such circumstances, it is nevertheless a cheap component and the failure of the torque limiting device is immediately obvious to the operator. This is advantageous, since without the torque limiting device, there is a possibility of damaging an expensive internal component of the adjuster mechanism or the brake caliper, and any such damage may not be immediately obvious, thereby causing a safety hazard. Embodiments of torque limiting devices shown in UK patent GB2304387 and German patent DE19923457C1, and other designs of torque limiting devices may be used on conjunction with the present invention.

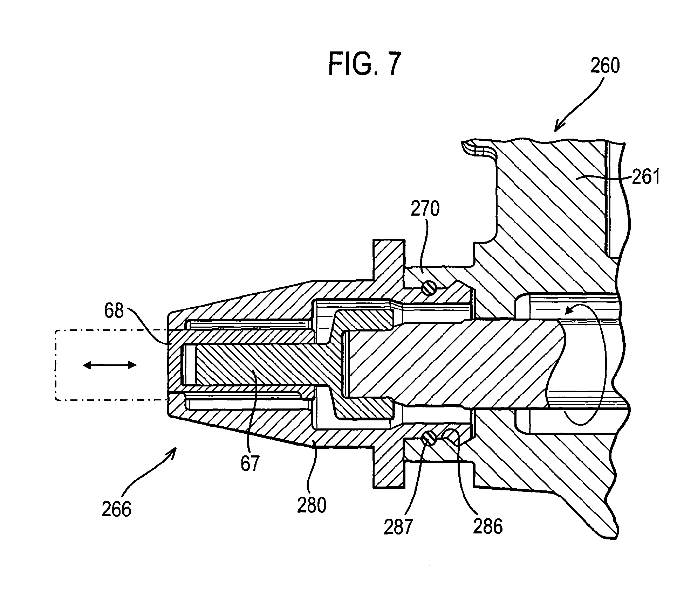

Figure 7 shows a third embodiment of a wear indicator assembly 266 which includes a first and second component identical to those shown in figure 4 but in this case the manual adjuster shaft cap body 280 sealingly engages in a recess 286 of a boss 270 of the sliding caliper 261. An elastomeric o ring 287 effects sealing.

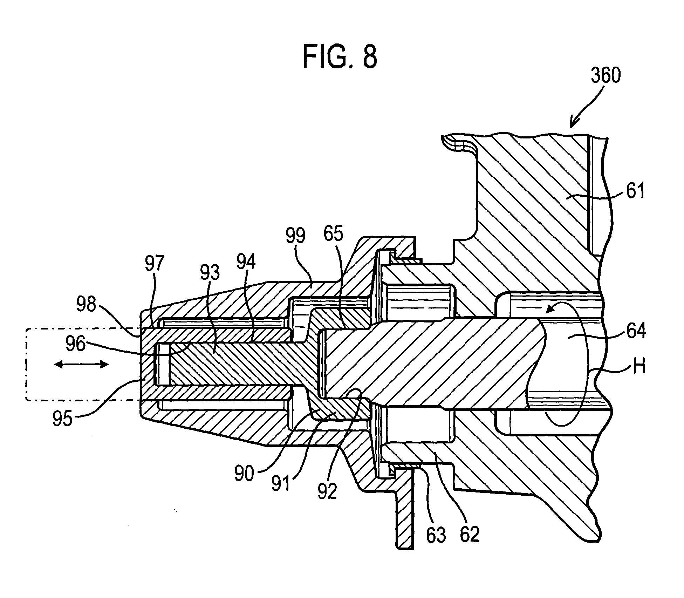

Figure 8 shows a fourth embodiment of a wear indicator assembly 360. In this case the caliper 61, ring retainer 63 and manual adjuster shaft 64 are identical to those shown in figure 4. In this case, the wear indicator assembly includes a drive pin 90 having a boss 91 (similar to boss 70) with a recess 92 (similar to recess 72). However, in this case shaft 93 has a hexagonal cross section which acts as a drive formation 94. Drive formation 94 slidingly engages a hexagonal recess 96 in indicator pin 95. In this case the external surface 97 of indicator pin 95 is threaded and threadingly engages a threaded internal surface of end hole 98. In summary, manual adjuster shaft cap 99 is rotationally fast with the caliper. The indicator pin 95 and drive pin 90 are both rotationally fast with the manual adjuster shaft 64. In this case the external thread on indicator pin 95 and the internal thread in end hole 98 are both left hand threads and thus as the manual adjuster shaft 64 is caused to rotate in the direction of arrow H, as the brake pads wear, then the indicator pin 95 progressively is withdrawn into the manual adjuster shaft cap 99, in a manner similar to the embodiment shown in figure 4. In one embodiment, the pad wear indicator can be designed such that the end of indicator pin 95 (the first component) becomes flush with the flat region on the end of the manual adjuster shaft cap (the second component) when the brake pads require changing.

In a further embodiment, the external thread on indicator pin 95 on the internal thread in end hole 98 could be right hand threads, in which case indicated pin 95 will progressively project from manual adjuster shaft cap 99 as the brake pads wear.

The indicator assembly shown in figures 4, 6, 7 and 8, all indicate brake pad wear by moving in a linear direction. The present application is not limited to linear movement of a wear indicator assembly, and in particular wear could be indicated by rotation of a particular component.

The adjuster mechanisms described compensate for wear in both the inboard and outboard brake pads. Where an adjuster mechanism only compensate for wear of one brake pad, then a wear indicator assembly could be utilised with such an adjuster mechanism to indicate the wear on the associated brake pad.

The present invention provides a system whereby a known caliper which does not include a wear indicator and which is in use (i.e. which is already fitted to a vehicle and the vehicle is being used) can be retro fitted with a wear indicator assembly. Thus, considering figure 3, cap 43 can be removed and can be replaced with a wear indicator assembly similar to wear indicator 226 of figure 7 (though adapted to suit the installation) in a simple and cheap manner. A particularly advantageous time to make such an adaptation would be when the brake pads are being renewed. Typically brake pads are supplied as an axle set (e.g. where the axle has two braked wheels then four brake pads are supplied). The present invention provides for a simple method of providing a wear indicator assembly on an in-use brake caliper by providing a kit of parts including an axle set of brake pads (or alternatively a wheel set of brake pads) and an appropriate number of wear indicator assemblies. Such a kit allows for the replacement of the brake pads of each brake and also for the provision of a wear indicator assembly on each brake during servicing of the brakes.

Whenever components are retro fitted onto an existing vehicle, then clearly the available space envelope must be able to accommodate the new components. The applicant is the first to realise that where existing brake calipers having deadjuster mechanisms are fitted to a vehicle, then there will inevitably be a free space in the vicinity of the deadjuster mechanism to allow access for deadjusting tools, such as spanners or sockets, and also a space available for the operators hand to manipulate such tools. The present invention takes advantage of this free space by positioning the wear indicator in the free space.

Thus, a designer, designing a wear indicator according to the present invention for retro fit on a particular brake caliper will almost certainly be assured of an appropriate free space in which to situate the wear indicator, and also may well be able to utilise a wear indicator from another design of brake caliper since the space envelope required for the wear indicator is considerably less than the free space required for the deadjusting tool and operators hand.

In particular the present invention provides for a method of servicing a brake assembly having a wear indicator according to the present invention. In summary, the method comprises the steps of removing the worn brake pad, removing the wear indicator assembly (or in further embodiments at least a part of the wear indicator assembly) manually deadjusting the adjuster mechanism, inserting the new brake pads and replacing the wear indicator assembly.

The present invention also provides for brake assembly having two wear indicator assemblies.

Thus the prior art brake assembly shown in figure 1 includes a wear indicator assembly 150 that indicates the wear on the outboard brake pad. If the brake assembly of figure 1 is provided with a wear indicator assembly according to the present invention then this wear indicator assembly will indicate the total amount of wear on both the inboard and outboard brake pads. Advantageously, this provides for a system whereby the wear on the inboard pad can be deduced. Thus, if the prior art brake assembly shown in figure 2 is provided with a wear indicator assembly as shown in figure 4 and (using the above example) with new 20 millimetre thick brake pads distance G is set at 18 millimetres and distance D is set at 18 millimetres, then if the brake pads wear evenly, then distance D will reduce at the same rate as distance G (assuming the gearing as mentioned in the above example). However, if the outboard pad wear faster then the inboard pad then distance D will reduce at a faster rate than distance G, thereby indicating the outboard pad is wearing faster than the inboard pad. Conversely, if the inboard pad wears faster than the outboard pad, then distance G will reduce faster than distance D again indicating uneven pad wear.

As mentioned above, adjuster mechanisms compensate for wear of brake pads. As will be appreciated, wear of the brake disc also occurs, though typically at a slower rate than wear of brake pads. Thus, by way of example, a brake disc might wear through to two sets of brake pads for the disc itself requires replacing. Thus, the known wear indicator 150 shown in figure 2 actually indicates the combined wear of the outer brake pad and the wear of the outboard disc face. However, such a system errs on the side of caution since when distance D has reduced to zero, thereby indicating pad replacement, because the brake disc outer face will have worn slightly, the outboard brake pad thickness will be slightly greater than anticipated.

Similarly, where an adjuster mechanism of the present invention normally compensates for wear of two brake pads, any wear on the outboard or inboard face of the brake disc will also be compensated for. Thus, again the indicator assembly of the present invention errs on the side of caution, since when the indicator assembly indicates that the brake pads require renewing, in fact the brake pads will have slightly more friction material than anticipated.

As described above, first component 67 is separate from the manual adjuster shaft 64 though in further embodiments these components could be integrally formed as a single component.

First component 67 has an external thread with the indicator pin 68 having an internal thread. In further embodiments first component could have an internal thread and the second component could have an external thread and such threads could either be right hand threads or left hand threads. As shown in figure 8, the second component is provided by the manual adjuster shaft cap 99 which is sealingly engaged with the outside of a boss of the caliper. In a further embodiment the second component could sealingly engage the inside of a recess of a caliper (for example in a manner similar to the way in which cap body 80 engages the inside of boss 270 of figure 7).

## Claims

1. A brake assembly including
a caliper
a first brake pad
an actuator operable to force the brake pad into engagement with a rotor,
and an adjuster mechanism operable to compensate for wear of the first brake pad,
the adjuster mechanism having a rotating component that is caused to rotate substantially in proportion to wear of the first brake pad, and is manually operable to deadjust the adjuster mechanism when replacement of the first brake pad is required, the rotating component being operably coupled to a pad wear indicator mounted on the caliper which visually indicates the amount of brake pad wear.

2. A brake assembly as defined in claim 1 further including
a second brake pad
in which the actuator is operable to force the second brake pad into engagement with a rotor
and the rotating compartment is caused to rotate substantially in proportion to the total amount of wear of the first and second brake pads in which the pad wear indicator indicates the total amount of wear of the first and second brake pads.

3. A brake assembly as defined in claim 1 or 2 in which the pad wear indicator indicates the amount of wear by moving linearly.

4. A brake assembly as defined in claim 3 in which the linear movement of the pad wear indicator is approximately equal to half of the total wear of both pads.

5. A brake assembly as defined in any preceding claim in which the rotating component is a manual deadjuster shaft having a head operable to manually deadjust the adjuster mechanism.

6. A brake assembly as defined in claim 5 in which the first component engages the head of the adjuster shaft.

7. A brake assembly as defined in claim 5 in which the first component engages a torque limiting device operable to limit the amount of torque that can be applied to the manual adjuster shaft and in which the torque limiting device engages the head of the manual adjuster shaft.

8. A brake assembly as defined in any preceding claim in which the pad wear indicator includes first and second components in threaded engagement, with the first component being rotatably fast with the rotating component and the second component being rotationally fast with the caliper in which one of the first and second components indicates the amount of pad wear.

9. A brake assembly as defined in claim 8 in which the second component acts as a manual adjuster shaft cap.

10. A brake assembly as defined in any one of claims 6 to 9 in which as the pads wear, the first or second component moves towards the caliper.

11. A brake assembly as defined in any one of claims 6 to 9 in which as the pads wear, the first or second component moves away from the caliper.

12. A brake assembly as defined in claim 2 or any one of claims 3 to 11 when dependent on claim 2 including a further wear indicator that indicates the wear condition of just one of the first and second brake pads.

13. A wear indicator assembly for mounting on a brake assembly the brake assembly including
a caliper
a first brake pad
an actuator operable to force the brake pad into engagement with a rotor,
and an adjuster mechanism operable to compensate for wear of the first brake pad,
the adjuster mechanism having a rotating component that is caused to rotate substantially in proportion to wear of the first brake pad,
the wear indicator assembly being operable to indicate an amount of brake pad wear, and including first and second components in threaded engagement, with the first component being securable rotationally fast with a rotating component of a brake adjuster mechanism and the second component being securable rotationally fast with a brake caliper in which one of the first and second components indicates the amount of pad wear.

14. A brake assembly including a wear indicator assembly as defined in claim 13.

15. A repair kit including a plurality of wheel sets of brake pads and a respective number of wear indicator assemblies as defined in claim 13.

16. A repair kit as defined in claim 15 in which each wear indicator assembly is preset to an unworn brake pad condition.

17. A repair kit as defined in claim 15 or 16 further including at least one torque limiter engageable with a head of an adjuster shaft of an adjuster mechanism and operable to limit the amount of torque that can be applied to the manual adjuster shaft.

18. A method of servicing a brake assembly including the steps of
a brake assembly including
a caliper
a first brake pad
an actuator operable to force the brake pad into engagement with a rotor,
and an adjuster mechanism operable to compensate for wear of the first brake pad,
the adjuster mechanism having a rotating component that is caused to rotate substantially in proportion to wear of the first brake pad, and is manually operable to deadjust the adjuster mechanism when replacement of the first brake pad is required,
the rotating component being operably coupled to a pad wear indicator mounted on the caliper which visually indicates the amount of brake pad wear,
wherein the first brake pad is a worn brake pad,
removing the worn brake pad
removing at least a part of the pad wear indicator to provide axis to the rotating component,
rotating the rotating component to deadjust the adjuster mechanism
fitting an unworn brake pad replacing the said at least a part of a pad wear indicator.
